# EUROPÄISCHE PATENTSCHRIFT

(11) **EP 0 856 437 B1**
(45) Veröffentlichungstag und Bekanntmachung des Hinweises auf die Patenterteilung: **13.06.2001**
(21) Anmeldenummer: 97122219.5
(22) Anmeldetag: 17.12.1997
(51) Int. Cl.: B60R 21/20

(54) **Gehäuse für den Gassack in einem Kraftfahrzeug**
Housing for an air bag in a motor vehicle
Boîtier pour un coussin gonflable dans un véhicule automobile

(30) Priorität: 01.02.1997 DE 19703767
(43) Veröffentlichungstag der Anmeldung: 05.08.1998
(73) Patentinhaber: ZF Lemförder Metallwaren AG, 49448 Lemförde (DE)
(72) Erfinder: Wagener, Keit, 49143 Bissendorf (DE); Imken, Hans-Jürgen, 49163 Hunteburg (DE); Klenk, Jürgen, 65486 Ginsheim (DE); Rick, Ulrich, 55595 Roxheim (DE)

(56) Entgegenhaltungen:
- DE-A- 4 141 617
- DE-A- 4 340 999
- GB-A- 2 268 714
- "DIE CAST AIR BAG INFLATOR WITH INTEGRAL CAN" RESEARCH DISCLOSURE, Nr. 336, 1.April 1992, Seite 315 XP000305047

## Beschreibung

Die Erfindung betrifft ein Gehäuse für einen aufblasbaren Gassack in einem Kraftfahrzeug nach dem Oberbegriff des Patentanspruches 1. Ein derartiges Gehäuse kann als bekannt gelten, siehe die GB-A-2 268 714.

Der Einsatz von aufblasbaren Gassäcken oder Airbags erfolgt im modernen Automobilbau in zunehmendem Maße. Der Gassack wird dabei zusammen mit einer Aufblasvorrichtung in einem Gehäuse untergebracht. Die Aufblasvorrichtung wird auch als Gasgenerator bezeichnet. Die Zündung des Systems erfolgt über Sensoren Bekannt sind Gehäuse für aufblasbare Gassäcke in unterschiedlichsten Varianten. So geht beispielsweise aus DE 41 41 617 A1 ein Fahrzeuggassackmodul hervor, bei der ein gefalteter Gassack und eine Aufblasvorrichtung gemeinsam in einem Gehäuse untergebracht sind und als komplette Baueinheit in das Fahrzeug eingesetzt werden. Das Gehäuse weist bei der in dieser Schrift dargestellten Lösung zwei Abteile auf, ein vorderes und ein hinteres Abteil. In das hintere Abteil wird eine Aufblasvorrichtung eingesetzt. Diese besteht aus einem zylindrischen, äußeren Gehäuse, in dem eine Vielzahl von Düsen ausgebildet sind. Das zylindrische äußere Gehäuse wird als Diffusor bezeichnet. Der Diffusor dient zur Aufnahme des Gasgenerators. Die Bohrungen des Diffusors sind so im Gehäuse der Gassackeinheit angeordnet, daß ein gerichtetes Ausströmen des Gases in den Gassack erfolgen kann. Ohne einen Diffusor käme es zu einer ungleichmäßigen Ausbreitung des Gases, nachdem der Gasgenerator gezündet hat. Dies wäre nicht wünschenswert, da der Gassack in Bruchteilen von Sekunden sicher, zuverlässig und gleichmäßig aufgeblasen werden muß, um seiner Bestimmung gemaß zu funktionieren.
Der Diffusor mit dem darin eingesetzten Gasgenerator wird in eine Aufnahme in der einen Seitenwand des Gehäuses eingeführt und über einen Gewindeschaft mit der gegenüberliegenden Gehäusewand verschraubt.
Die gesamte Gehäusekonstruktion ist bei der in dieser Schrift gezeigten Ausführung aus mehreren Einzelteilen zusammengesetzt. Das Gehäuse selbst ist als Blechteil hergestellt, an das ein Blechteil, wirkend als eine Verstärkungsrippe, angeschweißt ist. Bei einem Kunststoffgehäuse ist alternativ die Rippe angeklebt. Neben der fertigungstechnisch aufwendigen Herstellung hat ein derartiges Gehäuse ein hohes Eigengewicht.

In der DE 43 38 666 A1 wird vorgeschlagen, ein Gehause für einen Airbag aus Kunststoff herzustellen. Kunststoff bringt eine erhebliche Gewichtsersparnis im Vergleich zu metallischen Materialien mit sich. Bei der in dieser Schrift vorgestellten Lösung werden zudem die Halterungen zur Befestigung des Gehäuses im Kraftfahrzeug einstückig mit dem Kunststoffgehäuse ausgeführt. Auch bei diesem Airbag- Gehäuse ist es jedoch um eine optimale Ausströmung des Gases zum Aufblasen des Gassackes zu erreichen, erforderlich, zusätzlich einen Diffusor zu verwenden. Der Diffusor besteht hierbei aus einem zylindrischen Aluminiumformteil, in das der Gasgenerator eingesetzt ist. Nachdem der Diffusor in den dafür im Gehäuse vorgesehenen Raum eingesetzt worden ist, erfolgt die Montage des Gasgenerators.

Der Erfindung liegt das technische Problem zugrunde, ein Gehäuse für den aufblasbaren Gassack in einem Kraftfahrzzeug zu entwickeln, das einfacher und kostengünstiger herstellbar ist als bekannte Ausführungen.

Gelöst wird dieses technische Problem mit den kennzeichnenden Merkmalen des Patentanspruches 1. Ausgestaltungen der Erfindung sind Gegenstand der Unteransprüche.

Ein erfindungsgemäßes Gehäuse ist zusammen mit den daran angeformten Halterungen und dem den Gasgenerator aufnehmenden Diffusor einteilig ausgeführt.

Es besteht vorteilhafter Weise aus Kunststoff und wird im Spritzgußverfahren hergestellt. Kunststoff bietet sich als Werkstoff an, da er leicht verarbeitbar ist und eine hohe Gewichtsreduzierung gegenüber metallischen Ausführungen ermöglicht. Zudem ist es vorteilhaft, Steckerbefestigungen, Kabelhalterungen oder weitere erforderliche Bauteile einteilig mit dem Gehäuse auszuführen, sodaß dieses im Spritzgußverfahren in einem Arbeitsgang herstellbar ist und zusätzliche Bauteile nicht mehr hergestellt und montiert werden müssen.

Das Gehäuse kann aber erfindungsgemäß auch aus einer im Aluminiumdruckgußverfahren hergestellten Aluminiumausführung bestehen.

Das aus zwei Kammern bestehende Gehäuse weist eine vordere Kammer zur Aufnahme des gefalteten Gassacks oder Gasackmoduls und eine hintere Kammer zum Einbau des Gasgenerators auf. Die hintere Kammer ist als Diffusor ausgeführt. An der äußeren Wandung dieser Diffusorkammer sind Verstärkungsrippen zur Anlage des gefalteten Gassackes vorgesehen. Die Verstärkungsrippen stabilisieren einerseits das Gehäuse und gewährleisten andererseits einen Abstand zwischen dem Gassackmodul und der hinteren Kammer des Gehäuses. Zwischen den Verstärkungsrippen sind die strömungsoptimierten Gasdurchlassöffnungen eingebracht, die sowohl bezüglich ihrer Querschnittsgestaltung, als auch ihrer Anordnung so ausgeführt werden, daß der Gassack gleichmäßig aufgeblasen wird.
Die Diffusorkammer ist vorzugsweise bis auf eine Befestigungsöffnung einseitig geschlossen. Auf der gegenüberliegenden Seite befindet sich die Öffnung zum Einführen des Gasgenerators. Diese Öffnung ist in ihrem Randbereich verstärkt ausgeführt und sollte darüber hinaus einen als Dichtung verwendbaren Anlagebereich aufweisen. Dieser könnte beispielsweise als Labyrinth ausgeführt sein. Der in diese Öffnung eingeführte Gasgenerator weist einen komplementär zu dem Anlagebereich geformten, umlaufenden Radialflansch auf. Dieser wird von einer Dichtung umschlossen, die bei der Montage des Gasgenerators in den Anlagebereich der Diffusorkammerwandung eingepaßt wird. Die Montage des Gasgenerators erfolgt auf sehr einfache Weise beispielsweise durch eine Schraubverbindung. Selbstverständlich ist es auch möglich, den Gasgenerator mittels einer Schnappverbindung oder in anderer Weise in der Diffusorkammer zu arettieren.

Bei einer Schraubverbindung ist an dem Gasgenerator, auf der dem Radialflansch gegenüberliegenden Seite, einseitig ein Schraubbolzen befestigt, der in die Befestigungsöffnung der Diffusorkammer eingeführt wird und diese durchdringt. Von der freien äußeren Seite des Gehäuses her wird der Gasgenerator dann mit einer Mutter verschraubt. Zur Gewährleistung einer optimalen Dichtfunktion kann auch auf der Verschraubungsseite des Gasgenerators zusätzlich ein Dichtelement vorgesehen werden. Eine Dichtwirkung ist natürlich auch schon dadurch erreichbar, daß der an dem Gasgenerator angebrachte Schraubbolzen bereichsweise in eine komplementär geformte Aufnahme in der Befestigungsöffnung eingreift.

Durch das Festziehen der Verschraubung wird auch die Dichtung zwischen dem Gasgeneratordeckel und dem Anlagebereich der Diffusorkammerwandung wirksam. Der Gasgenerator ist erfindungsgemäß kleiner ausgeführt, als die ihn aufnehmende Diffusorkammer. Somit verbleibt nach dem Einbau des Gasgenerators in der Diffusorkammer ein Luftspalt um den Gasgenerator herum, der die stromungsoptimierte und gleichmäßige Verteilung des nach der Zündung sich ausbreitenden Gases ermöglicht, bevor dieses durch die Gasdurchlassöffnungen in den Gassack austritt.
Darüber hinaus kann der Luftspalt auch ein Verschmelzen des gezündeten Gasgenerators mit dem Gehäuse verhindern. Erfahrungsgemäß entwickeln sich nämlich je nach Gasgeneratorausführung unmittelbar nach der Zündung desselben, extrem hohe Temperaturen. Der Luftspalt verhindert mithin eine Verschmelzung von Gasgenerator und Kunststoffgehäuse, dessen Recycling nach dem Verschmelzen des Gasgenerators mit dem Gehäuse nahezu ausgeschlossen wäre.

Um den hohen Festigkeitsanforderungen eines erfindungsgemäßen Gehäuses zur Aufnahme eines Gassackes in einem Kraftfahrzeug gerecht zu werden, ist es vorteilhaft, die Kammer zur Aufnahme des Gassackmoduls mehrwandig auszuführen. Eine mehrwandige Ausführung ist insbesondere dann effizient, wenn mehr als zwei voneinander getrennte, parallele Kammersysteme die Außenwandung der Kammer bilden. Unmittelbar nach der Zündung des Airbags treten im Bereich des Gassackaustrittes extrem große Kräfte auf, die das Gehäuse fischmaulartig nach außen aufweiten. Die größte Aufweitung erfolgt dabei etwa mittig im Bereich der freien Öffnung der Kammer. Durch diese fischmaulartige Erweiterung des Gehäuses können Beschädigungen der umliegenden Bauteile entstehen, die vermeidbar sind. Eine weitere Verbesserung der Gehäusesteifigkeit läßt sich neben der mehrwandigen Ausführung der Kammerwand insbesondere auch erreichen, indem die den Gassack aufnehmende Kammerwand zusätzlich außen mit Versteifungsrippen versehen wird. Diese Versteifungsrippen sind nur effektiv wirksam, wenn sie von dem schwächsten Punkt der Kammerwandung ausgehend beispielsweise sternförmig oder kreisbogenförmig verlaufen. Der schwächste Punkt der Kammerwandung befindet sich an der Frontseite der Kammeröffnung genau mittig, da die Kammerwand an dieser Stelle die größten freien Wege zurück legen kann. Auch Wabenstrukturen haben sich im Vergleich zu den bisher bekannten in der Ansicht von oben gesehen, rechteckigen Konturen besser bewährt. Bei einer Strukturierung und gleichzeitig mehrwandiger Ausführung der Kammerwand kann gegenüber bekannten Ausführungen die Wandstärke bei verbesserter Festigkeit sogar reduziert werden.

Darüber hinaus ergibt sich ein erheblicher Stabilitätsvorteil eines erfindungsgemäßen Gehäuses, wenn die das Gassackmodul aufnehmende vordere Kammer sich zu ihrer Öffnung hin erweitert, also im Querschnitt gesehen eine V-Form aufweist. Eine derartige Gestaltung ermöglicht eine verbesserte Ausbreitung des Gassackes während des Aufblasvorganges.

Vorteilhaft sind bei einem erfindungsgemäßen Gehäuse für einen aufblasbaren Gassack in einem Kraftfahrzeug die bessere Anpassungsmöglichkeiten an das Einbau-Umfeld und eine sich daraus ergebende vereinfachte Montage. Die Gewichtsminimierung ermöglicht bei gleichzeitig verbesserter Festigkeit infolge der möglichen Materialeinsparungen somit auch eine kostengünstigere Herstellbarkeit ohne Sicherheitseinschränkungen hinnehmen zu müssen.
Nicht zuletzt ist ein erfindungsgemäßes Gehäuse auch einfach zu demontieren und wird gestiegenen Recyclinganforderungen besser gerecht, als bisher bekannte Ausführungen.

Ein Ausführungsbeispiel der Erfindung wird nachstehend unter Bezugnahme auf die Zeichnung näher erläutert. Es zeigen:
**Figur 1**: eine dreidimensionale Darstellung eines erfindungsgemäßen Gehäuses für einen aufblasbaren Gassack in einem Kraftfahrzeug
   und
**Figur 2**: eine dreidimensionale Darstellung eines erfindungsgemäßen Gehäuses für einen aufblasbaren Gassack in einem Kraftfahrzeug mit einem Teilschnitt durch die Diffusorkammer.

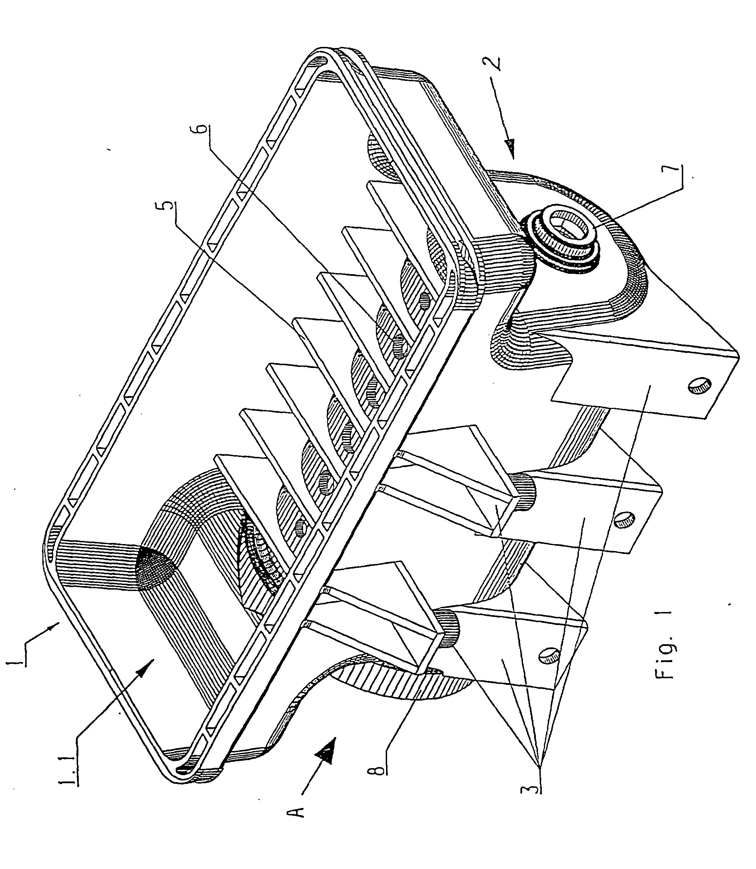

In der **Figur 1** ist eine dreidimensionale Darstellung eines erfindungsgemäßen Gehäuses (1) für einen aufblasbaren Gassack in einem Kraftfahrzeug dargestellt. Ein derartiges Gehäuse (1) ist zusammen mit den daran angeformten Halterungen (3) und dem den Gasgenerator (4) aufnehmenden Diffusor (2) einteilig ausgeführt. Es besteht aus Kunststoff und wird im Spritzgußverfahren hergestellt.
Das aus zwei Kammern bestehende Gehäuse (1) weist eine vordere Kammer (1.1) zur Aufnahme des gefalteten Gassacks oder Gasackmoduls und eine hintere Kammer (2) zum Einbau des Gasgenerators (4) auf. Die hintere Kammer (2) ist als Diffusor ausgeführt. An der äußeren Wandung dieser Diffusorkammer (2) sind Verstärkungsrippen (5) zur Anlage des gefalteten Gassackes angeformt. Die Verstärkungsrippen (5) stabilisieren einerseits das Gehäuse (1) und gewährleisten andererseits einen Abstand zwischen dem Gassackmodul und der Diffusorkammer (2) des Gehäuses. Zwischen den Verstärkungsrippen (5) sind die Gasdurchlassöffnungen (6) eingebracht. Die Diffusorkammer (2) ist bis auf eine Befestigungsöffnung (7) einseitig geschlossen. Auf der gegenüberliegenden Seite befindet sich eine Öffnung zum Einführen des Gasgenerators (4). Der in der Figur 1 nicht dargestellte Gasgenerator (4) wird in Richtung des mit A bezeichneten Pfeiles in die Diffusorkammer (2) eingeschoben. Die Öffnung weist einen verstärkten Randbereich (8) auf, der innen mit einem als Labyrinthdichtung ausgeführten Anlagebereich versehen ist.

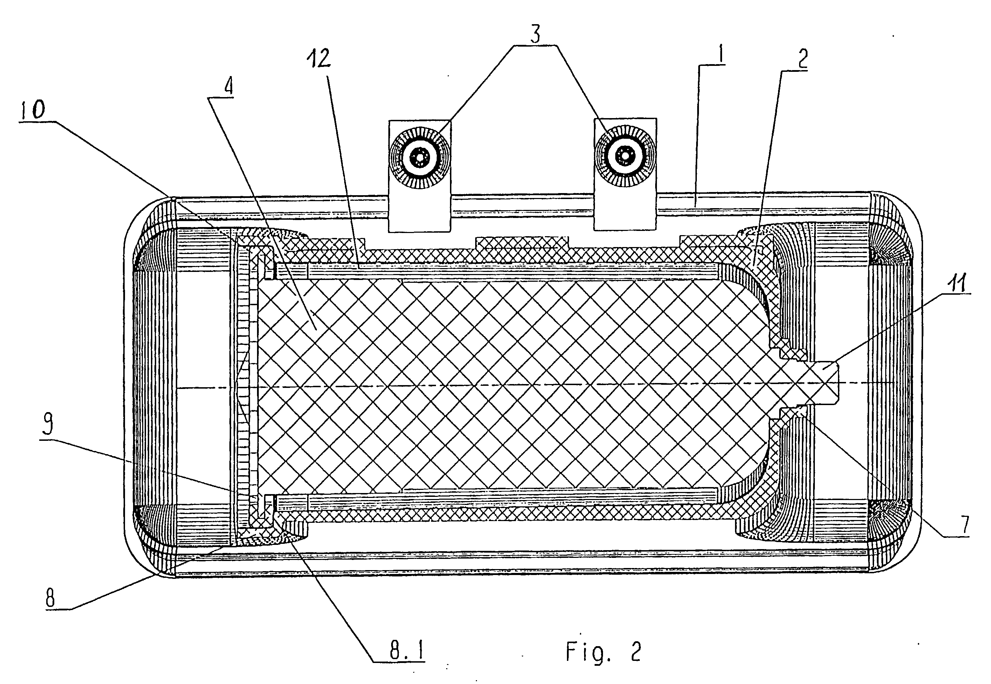

Aus der **Figur 2** geht eine dreidimensionale Darstellung eines erfindungsgemäßen Gehäuses (1) für einen aufblasbaren Gassack in einem Kraftfahrzeug mit einem Teilschnitt durch die Diffusorkammer (2) hervor.
Die Diffusorkammer (2) weist dabei einseitig eine Öffnung auf, deren Randbereich (8) verstärkt ausgeführt ist. Der Randbereich (8) weist darüber hinaus einen Anlagebereich (8.1) auf.
Der in die Öffnung eingeführte Gasgenerator (4) ist einseitig mit einem komplementär zu dem Anlagebereich (8.1) geformten Radialflansch (9) ausgestattet. Dieser Radialflansch (9) wird von einer Dichtung (10) umschlossen, die bei der Montage des Gasgenerators (4) in den Anlagebereich (8.1) der Diffusorkammerwandung eingepaßt wird. Die Montage des Gasgenerators (4) erfolgt auf sehr einfache Weise durch eine Schraubverbindung. An dem Gasgenerator (4) ist einseitig ein Schraubbolzen (11) befestigt, der in die Befestigungsöffnung (7) der Diffusorkammer (2) eingeführt wird und diese durchdringt. Von der freien äußeren Seite des Gehäuses her wird der Gasgenerator (4) dann mittels einer in der Figur 2 nicht dargestellten Mutter in an sich bekannter Weise arettiert. Um die Dichtwirkung zu verbessern, greift der an dem Gasgenerator angebrachte Schraubbolzen (11) bereichsweise in eine komplementär geformte Aufnahme in der Befestigungsöffnung (7) ein.
Durch das Festziehen der Verschraubung wird auch die Dichtung (10) zwischen dem Radialflansch (9) des Gasgenerators (4) und dem Anlagebereich (8.1) der Diffusorkammerwandung wirksam.
Der Gasgenerator (4) ist erfindungsgemäß kleiner ausgeführt, als die ihn aufnehmende Diffusorkammer (2). Somit verbleibt nach dem Einbau des Gasgenerators in der Diffusorkammer ein Luftspalt (12) zwischen Gasgenerator (4) und Diffusorkammerwandung (2), der die strömungsoptimierte und gleichmäßige Verteilung des nach der Zündung sich ausbreitenden Gases ermöglicht, bevor dieses durch die Gasdurchlassöffnungen (6), die in der Figur 2 nicht dargestellt sind, in den Gassack austritt.
Die Halterungen (3) sind in an sich bekannter Weise an dem Gehäuse (1) angeformt und mit diesem einstückig ausgeführt.

## Patentansprüche

1. Gehäuse für einen aufblasbaren Gassack in einem Kraftfahrzeug in einteiliger Ausführung, mit daran angeformten Befestigungshalterungen (3), mit einer Diffusorkammer (2), in der ein Gasgenerator eingesetzt ist, und mit einer Kammer (1,1) zur Aufnahme eines gefalteten Gassackes, wobei die Diffusorkammerwandung zwischen den beiden Kammern des Gehäuses (1) mit strömungsoptimierten Gasdurchlassöffnungen (6) ausgestattet ist,
**dadurch gekennzeichnet, daß**
in der Kammer (1.1) zur Aufnahme des gefalteten Gassackes an der Diffusorkammerwandung Verstärkungsrippen (5) des Gehäuses (1) angeformt sind, die sich gegen die Wandungen der Kammer (1.1) zur Aufnahme des gefalteten Gassackes abstützen.

2. Gehäuse für einen aufblasbaren Gassack in einem Kraftfahrzeug nach Anspruch 1,
dadurch gekennzeichnet, daß
das Gehäuse (1) ein Kunststoffspritzgußteil ist.

3. Gehäuse für einen aufblasbaren Gassack in einem Kraftfahrzeug nach Anspruch 1,
dadurch gekennzeichnet, daß
das Gehäuse (1) ein Aluminiumdruckgußteil ist.

4. Gehäuse für einen aufblasbaren Gassack in einem Kraftfahrzeug nach einem der Ansprüche 1 bis 3,
dadurch gekennzeichnet, daß
die Kammer (1.1) im Querschnitt gesehen eine V-Form aufweist.

## Claims

1. Housing constructed in one part for an inflatable airbag in a motor vehicle, with moulded-on mounts (3), with a diffuser chamber (2), in which a gas generator is inserted, and with a chamber (1.1) for accommodating a folded airbag, wherein the diffuser chamber wall between the two chambers of the housing (1) is provided with gas passage openings (6) which optimise the flow,
**characterised in that**
reinforcing ribs (5) for the housing (1) are moulded onto the diffuser chamber wall in the chamber (1.1) for accommodating the folded airbag, which ribs are supported against the walls of the chamber (1.1) for accommodating the folded airbag.

2. Housing for an inflatable airbag in a motor vehicle according to Claim 1,
characterised in that
the housing (1) is a plastics injection-moulded part.

3. Housing for an inflatable airbag in a motor vehicle according to Claim 1,
characterised in that
the housing (1) is an aluminium diecast part.

4. Housing for an inflatable airbag in a motor vehicle according to any one of Claims 1 to 3,
characterised in that
the chamber (1.1) has a V shape in cross section.

## Revendications

1. Boîtier pour un coussin gonflable dans un véhicule automobile, dans une version en une partie, avec des supports de fixation (3) venus de moulage sur ce boîtier, avec une chambre de diffuseur (2), dans laquelle est inséré un générateur de gaz, et avec une chambre (1.1) destinée à recevoir un coussin gonflable plié, la paroi de la chambre de diffuseur entre les deux chambres du boîtier (1) étant pourvue d'orifices de passage de gaz (b) optimisés du point de vue de l'écoulement, caractérisé en ce que dans la chambre (1.1) destinée à recevoir le coussin gonflable plié, sont moulées sur la paroi de la chambre de diffuseur des nervures de renfort (5) du boîtier (1), qui prennent appui contre les parois de la chambre (1.1) destinée à recevoir le coussin gonflable plié.

2. Boîtier pour un coussin gonflable dans un véhicule automobile selon la revendication 1, caractérisé en ce que le boîtier (1) est un élément en matière plastique moulé par injection.

3. Boîtier pour un coussin gonflable dans un véhicule automobile selon la revendication 1, caractérisé en ce que le boîtier (1) est un élément en aluminium coulé sous pression.

4. Boîtier pour un coussin gonflable dans un véhicule automobile selon l'une des revendications 1 à 3, caractérisé en ce que la chambre (1.1) a une forme en V, vue en coupe transversale.
